# EUROPÄISCHE PATENTSCHRIFT

(11) **EP 1 114 533 B1**
(45) Veröffentlichungstag und Bekanntmachung des Hinweises auf die Patenterteilung: **18.06.2003**
(21) Anmeldenummer: 99942895.6
(22) Anmeldetag: 20.08.1999
(51) Int. Cl.: H04B 17/00, H04L 29/06, G06F 11/16, G06F 11/20, H04L 12/413

(54) **VERFAHREN UND VORRICHTUNG ZUR ÜBERWACHUNG VON SIGNALEN BEI VERNETZTEN SYSTEMEN**
METHOD AND DEVICE FOR MONITORING SIGNALS IN NETWORKING SYSTEMS
PROCEDE ET DISPOSITIF POUR SURVEILLER DES SIGNAUX DANS DES SYSTEMES EN RESEAU

(30) Priorität: 17.09.1998 DE 19842506
(43) Veröffentlichungstag der Anmeldung: 11.07.2001
(73) Patentinhaber: Volkswagen Aktiengesellschaft, 38436 Wolfsburg (DE)
(72) Erfinder: ALTENKIRCH, Manfred, D-38553 Wasbüttel (DE); SCHMIDT, Reiner, D-31228 Peine (DE); KLINKIG, Andreas, D-38162 Cremlingen (DE)
(74) Vertreter: Effert, Bressel und Kollegen
(86) Internationale Anmeldenummer: EP9906111
(87) Internationale Veröffentlichungsnummer: WO00018045

(56) Entgegenhaltungen:
- US-A- 4 070 648
- US-A- 4 347 609
- US-A- 4 573 154
- US-A- 5 193 093

## Beschreibung

Die Erfindung betrifft ein Verfahren und Vorrichtung zur Überwachung von Signalen bei vernetzten Systemen gemäß den Oberbegriffen der unabhängigen Patentansprüche.

Bei konventionellen Steuergeräten mit hardwaremäßig realisierten Sensoren und Stellgliedern ist es Stand der Technik, diese Leitungen vom Steuergerät auf Unregelmäßigkeiten zu überwachen. Dieses geschieht in der Art, daß z.B. Ausgangsströme und/oder Ausgangsspannungen gemessen und mit dem vom Prozessor vorgegebenen Sollwert verglichen werden. Bei nicht erfolgreicher Übereinstimmung erfolgt ein Fehlereintrag und ggf. eine Systemreaktion auf diesen Fehler. Eingangsgrößen werden plausibilisiert (z. B. Schalter) oder mit verbotenen Bereichen versehen (z. B. Endwerte von Potentiometern).

Bei Signalen, die bei vernetzten Systemen ausgetauscht werden, ist diese Art der Diagnose nicht möglich. Fehler, die durch fehlerhaft arbeitende Bauteile entstehen können, müssen mit aufwendigen Verfahren (Checksummen, Botschaftszähler, doppelt gesendete Signale) ausgeschlossen werden.

Aus der US-A-4 573 154 ist eine Vorrichtung zur Fehler- und Plausibilitätsüberwachung von Signalen oder Daten in einem vernetzten datentechnischen System bekannt, bei dem jedes Netzmitglied, aus den die Netzmitglieder verbindenden Daten- oder Signalleitungen Signale oder Daten erhalten oder in diese einspeisen kann, wobei das Netzmitglied über wenigstens einen Hauptprozessor verfügt, der mit einem ebenfalls an den Netzleitungen angeschlossenen Überwachungsprozessor daten- oder signaltechnisch in Verbindung steht. Empfängt der eine Hauptprozessor Daten von einem anderen Hauptprozessor, so vergleicht parallel der Überwachungsprozessor die Adresse und schaltet bei positivem Vergleich einen Schalter, so dass die im Hauptprozessor empfangenen Daten über einen Treiber an den sendenden Hauptprozessor zurück übertragen werden, wo diese mit den ausgesandten verglichen werden können. Dabei wird also jede Nachricht zweimal übertragen, was die Übertragungskapazität begrenzt oder den Netzaufwand erhöht.

Aus der US-A-4 070 648 ist ein Verfahren zur Fehlerüberwachung bekannt, wobei die Netzmitglieder über zwei Datenleitungen miteinander verbunden sind, wobei über die eine Datenleitung die Daten und über die andere Datenleitung die invertierten Daten übertragen werden, so dass empfängerseitig mittels eines Parity-Checks das Übertragsergebnis überprüfbar ist.

Die Aufgabe an die hier beschriebene Erfindung ist es, für datentechnische Netzwerke ein Fehlererkennungs- und Plausibilitätsdiagnoseverfahren sowie eine dazu geeignete Vorrichtung vorzustellen, welche mit geringem technischen Aufwand realisierbar sind

Die Lösung dieser Aufgabe ergibt sich aus den Merkmalen der unabhängigen Ansprüche 1 und 2, während vorteilhafte Ausgestaltungen und Weiterbildungen der Erfindung den Unteransprüchen entnehmbar sind.

Demnach ist vorgesehen, daß jedes Mitglied des datentechnischen Netzwerkes selbst dafür verantwortlich ist, daß die Prozeßsignale, die es sendet, in dem Netzwerk allen anderen Teilnehmern fehlerfrei und plausibel zur Verfügung gestellt werden. Zudem ist vorgesehen, daß alle Signale, die dieses Mitglied empfängt und die von dem Sender sicher als richtig erkannt wurden auch korrekt zum eigenen Datenverarbeitungsprozeß gelangen.

Das geschieht bei jedem der Mitglieder im datentechnischen Netzwerk durch einen bei eigensicheren Steuergeräten ohnehin vorhandenen Überwachungsprozessor, der für das beschriebene Verfahren jedoch über eine eigene Daten- bzw. Signalleitung zum Netz verfügt.

Dieser Prozessor liest alle auf dem Netzwerk vorhandenen Signale und übergibt deren Inhalte an den zugehörigen Hauptprozessor.

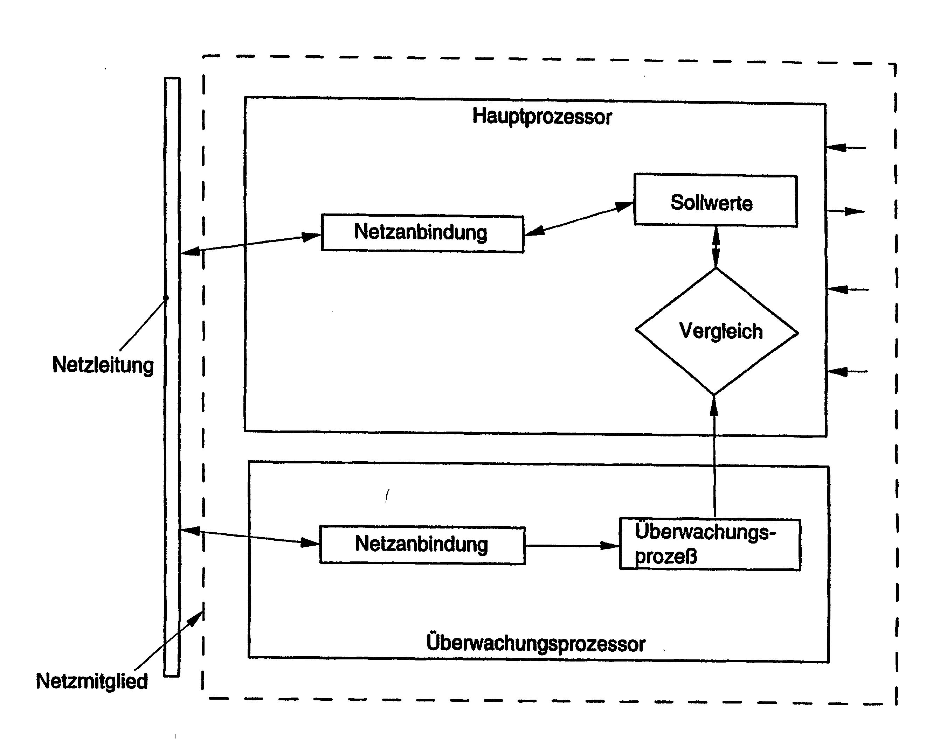

Wie der beigefügten Abbildung eines Ausführungsbeispiels entnehmbar ist, besteht das datentechnische Netz aus einer oder mehreren Netzleitungen, an die wenigstens zwei Netzmitgliedem, die wenigstens über einen Hauptprozessor und einen Überwachungsprozessor aufweisen.

Der Hauptprozessor eines jeden Mitgliedes im datentechnischen Netz übemimmt bestimmte datentechnische Arbeiten und bedient sich dabei mit Daten oder Sensorsignalen, die er direkt über seinen Anschluß an das Netz (Netzanbindung) oder über gesonderte Signal- oder Datenleitungen erhält. Die so gewonnenen Eingangssignale werden nach vorgegebenen Verarbeitungs- und Auswertungsregeln bearbeitet und Ausgabesignale oder Ausgabedaten erzeugt, die entweder direkt an Stellglieder beispielsweise zur Betätigung von Aktuatoren oder zur Weiterleitung ins Datennetz bestimmt und abgesandt werden. Der Hauptprozessor verfügt zudem über eine mit einem Eingangskanal versehene Vergleichseinheit und über einen Speicher zur Ablage von Signal- oder Datensollwerten.

Daneben ist in diesem Ausführungsbeispiel jedem Netzteilnehmer ein Überwachungsprozessor zugeordnet, der mit der oder den Netzleitungen sowie mit dem Hauptprozessor des zugehörigen Netzmitgliedes in datentechnischer Verbindung steht.

Die Arbeitsweise der erfindungsgemäßen Vorrichtung kann wie folgt erläutert werden:
Wenn der Hauptprozessor eines Netzmitgliedes Signale in das Netzwerk sendet, werden diese Signale über die zweite Netzanbindung des Netzmitgliedes von dessen Überwachungsprozessor empfangen und dem Hauptprozessor zur Verfügung gestellt. Der Hauptprozessor vergleicht die beiden Signale oder Daten und kann bei Differenzen oder Unplausibilitäten einen Fehler in einem Fehlerspeicher eintragen und entsprechende Reaktionen zur Korrektor der von ihm ursprünglich gesendeten Signale oder Daten einleiten.

Beim Empfangen vor Signalen oder Daten aus dem Netz erhalten beide Prozessoren des Netzteilnehmers die Signale oder Daten. Der Überwachungsprozessor sendet die dort empfangenen Daten oder Signale jedoch unverzüglich an die Vergleichsstufe des Hauptprozessors, welche die beiden Daten oder Signale vergleicht und bei Differenzen einen Fehler in einen Fehlerspeicher eintragen und entsprechende Reaktionen einleiten kann.

Dadurch ist es möglich, eine erhöhte Sicherheit des Netzwerkes zu erreichen, ohne das Netz kosten- und verarbeitungszeitaufwendig mit zusätzlichen Datenströmen bzw. die Netzteilnehmer mit zusätzlichen Algorithmen zu belasten. Jedes bereits heute definierte Signal erhält dadurch eine erhöhte Sicherheitsstufe.

In einer Ausgestaltung der Erfindung kann vorgesehen sein, daß jeder Netzteilnehmer von einem zentralen Überwachungsprozessor die überwachungsrelevanten Daten oder Signale aus dem Netz zugeleitet bekommt.

In einer anderen Variante der erfindungsgemäßen Vorrichtung kann vorgesehen sein, daß der Überwachungsprozessor Bestandteil des Hauptprozessors ist und dieser damit über jeweils eine getrennte Eingangsleitung für die Aufgaben des Hauptprozessors und für die Aufgaben des Überwachungsprozessors verfügt.

## Patentansprüche

1. Verfahren zur Fehler- und Plausibilitätsüberwachung von Signalen oder Daten in einem vemetzten datentechnischen System, bei dem jedes Netzmitglied aus den die Netzmitglieder verbindenden Netzleitungen Signale oder Daten erhalten oder in diese einspeisen kann, wobei jedes Netzmitglied einen elektronischen Hauptprozessor umfaßt, der über einen Anschluß an die Netzleitungen seine Signale oder Daten abgibt oder empfängt, wobei jedes Netzmitglied über einen eigenen Überwachungsprozessor verfügt,
der Hauptprozessor über eine Verbindungsleitung mit dem Überwachungsprozessor verbunden ist, **dadurch gekennzeichnet, daß**
der Überwachungsprozessor die vom Hauptprozessor des Netzmitgliedes empfangenen und gesendeten Daten empfängt und über die Verbindungsleitung an den Hauptprozessor überträgt,
die vom Überwachungsprozessor übertragenen Daten oder Signale im Hauptprozessor mit Sollwerten zu den vom Hauptprozessor gesendeten,
empfangenen oder speziellen Daten oder Signalen verglichen werden und bei Abweichungen von den vorgegebenen Sollwerten oder sonst erkannten Fehlern der Hauptprozessor den Fehler dokumentierende und/oder korrigierende Reaktionen einleitet.

2. Vorrichtung zur Fehler- und Plausibilitätsüberwachung von Signalen oder Daten in einem vemetzten datentechnischen System, bei dem jedes Netzmitglied mit den Netzleitungen des Netzes verbunden ist, über die das Netzmitglied Signale oder Daten erhalten oder in diese einspeisen kann, wobei jedes Netzmitglied einen Hauptprozessor umfaßt, der über einen Anschluß an die Netzleitung verfügt, wobei jedes Netzmitglied über einen eigenen Überwachungsprozessor verfügt,
der Hauptprozessor jeweils mit dem Überwachungsprozessor über eine
Verbindungsleitung daten- oder signaltechnisch in Verbindung steht,
**dadurch gekennzeichnet, daß**
die vom Überwachungsprozessor aus den Netzleitungen aufgenommenen Daten oder Signale einer Vergleichseinheit im Hauptprozessor zuführbar sind, in der diese Hauptprozessor vom gesendeten, vom Überwachungsprozessor empfangenen und an den Hauptprozessor über die Verbindungsleitung übertragenen Daten oder Signale mit in einem Sollwertspeicher im Hauptprozessor abgelegten Sollwerten vergleichbar und auf Fehlerhaftigkeit und/oder Plausibilität überprüfbar sind.

3. Vorrichtung nach Anspruch 2, **dadurch gekennzeichnet, daß**
der Überwachungsprozessor Bestandteil des Hauptprozessors ist und dieser damit über jeweils eine getrennte Eingangsleitung für die Aufgaben des Hauptprozessors und für die Aufgaben des Überwachungsprozesses verfügt.

## Claims

1. Method for error and plausibility checking for signals or data in a networked data system in which every network member can obtain signals or data from the network lines connecting the network members or can supply signals or data to said network lines, each network member comprising an electronic main processor which uses a connection to the network lines to output or receive its signals or data, with each network member having a dedicated monitoring processor,
the main processor being connected to the monitoring processor by means of a connecting line, **characterized in that**
the monitoring processor receives the data received and transmitted by the network member's main processor and transmits them to the main processor via the connecting line,
the data or signals transmitted by the monitoring processor are compared in the main processor with nominal values for the data or signals transmitted by the main processor, data or signals received or special data or signals, and in the event of discrepancies from the prescribed nominal values or other detected errors the main processor initiates reactions which document and/or correct the error.

2. Apparatus for error and plausibility checking for signals or data in a networked data system in which every network member is connected to the network lines in the network, and the network member can obtain signals or data via said network lines or can supply signals or data thereto, each network member comprising a main processor which has a connection to the network line, with each network member having a dedicated monitoring processor,
the main processor being respectively connected to the monitoring processor for data or signal purposes by means of a connecting line, **characterized in that** the data or signals received by the monitoring processor from the network lines can be supplied to a comparison unit in the main processor, and said comparison unit can compare these data or signals transmitted by the main processor, received by the monitoring processor and transmitted to the main processor via the connecting line with nominal values stored in a nominal value memory in the main processor and can check them for errors and/or plausibility.

3. Apparatus according to Claim 2, **characterized in that**
the monitoring processor is part of the main processor, and the main processor thus has a respective separate input line for the tasks of the main processor and for the tasks of the monitoring processor.

## Revendications

1. Procédé de surveillance des défauts et de la plausibilité des signaux ou des données dans un système technique de données en réseau, avec lequel chaque élément du réseau peut recevoir des signaux ou des données à partir des lignes du réseau qui relient les éléments du réseau ou en injecter dans celles-ci, chaque élément du réseau comprenant ici un processeur principal électronique qui délivre ou reçoit ses signaux ou ses données par le biais d'un point d'accès aux lignes du réseau, chaque élément du réseau disposant ici de son propre processeur de surveillance, le processeur principal étant relié au processeur de surveillance par le biais d'une ligne de liaison, **caractérisé en ce**
le processeur de surveillance reçoit les données reçues et émises par le processeur principal de l'élément du réseau et les transmet au processeur principal par le biais de la ligne de liaison,
les données ou les signaux transmis par le processeur de surveillance sont comparés dans le processeur principal avec des valeurs de consigne des données ou des signaux émis, reçus par le processeur principal ou spéciaux et, en cas de différences par rapport aux valeurs de consigne prédéfinies ou d'autres défauts connus, le processeur principal initie des réactions de documentation et/ou de correction des défauts.

2. Dispositif de surveillance des défauts et de la plausibilité des signaux ou des données dans un système technique de données en réseau, avec lequel chaque élément du réseau est relié avec les lignes du réseau par le biais desquelles l'élément du réseau peut recevoir des signaux ou des données ou en injecter dans celles-ci, chaque élément du réseau comprenant ici un processeur principal qui dispose d'un point d'accès à la ligne du réseau, chaque élément du réseau disposant ici de son propre processeur de surveillance, le processeur principal étant en liaison technique des données ou des signaux avec le processeur de surveillance par le biais d'une ligne de liaison, **caractérisé en ce que** les données ou les signaux collectés sur les lignes du réseau par le processeur de surveillance peuvent être acheminés à un module de comparaison dans le processeur principal dans lequel les données ou les signaux émis par le processeur principal, reçus par le processeur de surveillance et transmis au processeur principal par le biais de la ligne de liaison peuvent être comparés avec des valeurs de consigne stockées dans une mémoire de valeurs de consigne dans le processeur principal et peuvent faire l'objet d'un contrôle de présence de défauts et/ou de plausibilité.

3. Dispositif selon la revendication 2, **caractérisé en ce que** le processeur de surveillance fait partie intégrante du processeur principal et celui-ci dispose ainsi à chaque fois d'une ligne d'entrée séparée pour les tâches du processeur principal et pour les tâches du processus de surveillance.
